# EUROPEAN PATENT APPLICATION

(11) **EP 3 223 168 A1**
(43) Date of publication of application: **27.09.2017**
(21) Application number: 15861645.8
(22) Date of filing: 26.08.2015
(51) Int. Cl.: G06F 17/30

(54) **VISUALIZING DEVICE, VISUALIZING METHOD AND VISUALIZING PROGRAM**

(30) Priority: 19.11.2014 JP 2014234277
(71) Applicant: NEC Corporation, Tokyo 108-8001 (JP)
(72) Inventor: MOTOHASHI, Yousuke, Tokyo 108-8001 (JP); YAGI, Sayaka, Tokyo 108-8001 (JP)
(74) Representative: Vossius & Partner Patentanwälte Rechtsanwälte mbB
(86) International application number: PCT/JP2015/004285
(87) International publication number: WO 2016/079909

(57) **Abstract**

A classification axis allocating means 81 is a visualizing device that visualizes a classification model in which classification conditions for classifying classification target data are represented in a hierarchical structure, and allocates classification axes to respective dimensional axes of a multidimensional space in accordance with priority levels of the classification axes to be used for the classification conditions. A region splitting means 82 splits the dimensional axes, based on types of the allocated classification axes, and allocates classification target data to respective regions on the multidimensional space to be split in accordance with the split dimensional axes. A display means 83 displays the classification target data allocated to the respective regions of the multidimensional space.

## Description

### Technical Field

The present invention relates to a visualizing device that visualizes data represented in a hierarchical structure, a visualizing method and visualizing program.

### Background Art

As a method for visualizing data represented in a hierarchical structure, a display method using a tree structure has been known. For example, when visualizing data by using a tree structure, classification target data is displayed in a leaf node of the tree structure, and a classification condition is displayed in a node indicating a branch condition.

When visualizing the classification target data with a tree structure, there is a problem that visualizing accuracy decreases when the number of branch nodes (branch conditions) increases. Therefore, various methods have been devised for improving visualizing accuracy for data represented in a hierarchical structure.

In PTL 1, a method for visualizing hierarchical multivariable data is described. The visualizing method described in PTL1 is referred to as Heiankyo-View, and, in the method, each item of data in a hierarchical structure database is displayed as an icon, and icons of the hierarchical structure data are arranged in a two-dimensional plane so as to be in a recursive nested structure.

Specifically, Heiankyo-View is a method for visualizing hierarchical data, which displays leaf nodes with colored icons and represents branch nodes in a rectangular nesting structure surrounding the icons. In Heiankyo-View, processing that fills and arranges a set of rectangles in order of the hierarchy and processing that makes rectangular frames surrounding the rectangles are repeatedly performed. Such processing is performed, whereby the hierarchical data are arranged in one screen, and visualizing accuracy is improved.

### Citation List

### Patent Literature

PTL 1: Japanese Patent Application Laid-Open No. 2008-299363

### Summary of Invention

### Technical Problem

In Heiankyo-View, a method for splitting data (that is, a rectangle range) is sequentially determined along a tree structure. For that reason, when a node indicating a peculiar content is included in hierarchical structure data, it is sometimes impossible to appropriately split the hierarchical structure data. In this case, there is a technical problem that a relationship between related data becomes difficult to understand.

Therefore, an object of the present invention is to provide a visualizing device, visualizing method and visualizing program that are capable of visualizing a classification relationship between data represented in a hierarchical structure so that the classification relationship is easily grasped.

### Solution to Problem

A visualizing device according to the present invention is a visualizing device that visualizes a classification model in which classification conditions for classifying classification target data are represented in a hierarchical structure, and includes: a classification axis allocating means that allocates classification axes to respective dimensional axes of a multidimensional space in accordance with priority levels of the classification axes to be used for the classification conditions; a region splitting means that splits the dimensional axes, based on types of the allocated classification axes, and allocates the classification target data to respective regions on the multidimensional space to be split in accordance with the split dimensional axes; and a display means that displays the classification target data allocated to the respective regions of the multidimensional space.

Another visualizing device according to the present invention is a visualizing device that visualizes a plurality of components to be used for predicting input data, and the visualizing device includes: a classification axis display means that extracts classification axes to be used for conditions from a classification model classified by the conditions for selecting the components to be used for prediction, and displays the classification axes in association with any of dimensional axes of a multidimensional space that displays the components; a classification content display means that allocates classifications or values of the classification axes to the dimensional axes split in accordance with types of the associated classification axes and displays the dimensional axes and the classifications or the values; and a classification target display means that displays the components that meet the conditions for selection, in regions on the multidimensional space specified by the classifications or the values of the classification axes allocated to the respective classification axes.

Yet another visualizing device according to the present invention is a visualizing device that visualizes a plurality of components calculated based on learning data being a set of a plurality of samples, and the visualizing device includes: a classification axis display means that extracts classification axes to be used for conditions from a classification model classified by the conditions under which the samples are applied to the components, and displays the classification axes in association with any of dimensional axes of a multidimensional space that displays the components; a classification content display means that allocates classifications or values of the classification axes to the dimensional axes split in accordance with types of the associated classification axes and displays the dimensional axes and the classifications or the values; and a classification target display means that displays the components that meet the conditions under which the samples are applied, in regions on the multidimensional space specified by the classifications or the values of the classification axes allocated to the respective classification axes.

A visualizing method according to the present invention is a visualizing method that visualizes a classification model in which classification conditions for classifying classification target data are represented in a hierarchical structure, and the visualizing method including: allocating classification axes to respective dimensional axes of a multidimensional space in accordance with priority levels of the classification axes to be used for the classification conditions; splitting the dimensional axes, based on types of the allocated classification axes, and allocating the classification target data to respective regions on the multidimensional space to be split in accordance with the split dimensional axes; and displaying the classification target data allocated to the respective regions of the multidimensional space.

Another visualizing method according to the present invention is a visualizing method that visualizes a plurality of components to be used for predicting input data, and the visualizing method includes: extracting classification axes to be used for conditions from the classification model classified by the conditions for selecting components to be used for prediction, and displaying the classification axes in association with any of dimensional axes of a multidimensional space that displays the components; allocating classifications or values of the classification axes to the dimensional axes split in accordance with types of the associated classification axes and displaying the dimensional axes and the classifications or the values; and displaying the components that meet the conditions for selection, in regions on the multidimensional space specified by the classifications or the values of the classification axes allocated to the respective classification axes.

Yet another visualizing method according to the present invention is a visualizing method that visualizes a plurality of components calculated based on learning data being a set of a plurality of samples, and the visualizing method includes: extracting classification axes to be used for conditions from a classification model classified by the conditions under which the samples are applied to the components, and displaying the classification axes in association with any of dimensional axes of a multidimensional space that displays the components; allocating classifications or values of the classification axes to dimensional axes split in accordance with types of the associated classification axes and displaying the dimensional axes and the classifications or the values; and displaying the components that meet the conditions under which the samples are applied, in regions on the multidimensional space specified by the classifications or the values of the classification axes allocated to the respective classification axes.

A visualizing program according to the present invention is a visualizing program to be applied to a computer that visualizes a classification model in which classification conditions for classifying classification target data are represented in a hierarchical structure, and the visualizing program causes the computer to execute: classification axis allocating processing that allocates classification axes to respective dimensional axes of a multidimensional space in accordance with priority levels of the classification axes to be used for the classification conditions; region splitting processing that splits the dimensional axes, based on types of the allocated classification axes, and allocates the classification target data to respective regions on the multidimensional space to be split in accordance with the split dimensional axes; and display processing that displays the classification target data allocated to the respective regions of the multidimensional space.

Another visualizing program according to the present invention is a visualizing program to be applied to a computer that visualizes a plurality of components to be used for predicting input data, and the visualizing program causes the computer to execute: classification axis display processing that extracts classification axes to be used for conditions from the classification model classified by the conditions for selecting the components to be used for prediction, and displays the classification axes in association with any of dimensional axes of a multidimensional space that displays the components; classification content display processing that allocates classifications or values of the classification axes to dimensional axes split in accordance with types of the associated classification axes and displays the dimensional axes and the classifications or the values; and classification target display processing that displays components that meet the conditions for selection, in regions on the multidimensional space specified by the classifications or the values of the classification axes allocated to the respective classification axes.

Yet another visualizing program according to the present invention is a visualizing program to be applied to a computer that visualizes a plurality of components calculated based on learning data being a set of a plurality of samples, and the visualizing program causes the computer to execute: classification axis display processing that extracts classification axes to be used for conditions from a classification model classified by the conditions under which the samples are applied to the components, and displays the classification axes in association with any of dimensional axes of a multidimensional space that displays the components; classification content display processing that allocates classifications or values of the classification axes to dimensional axes split in accordance with types of the associated classification axes and displays the dimensional axes and the classifications or the values; and classification target display processing that displays the components that meet the conditions under which the samples are applied, in regions on the multidimensional space specified by the classifications or the values of the classification axes allocated to the respective classification axes.

### Advantageous Effects of Invention

According to the present invention, a technical effect can be achieved in which a classification relationship between data represented in a hierarchical structure can be visualized so that the classification relationship is easily grasped, by the above mentioned technical means.

### Brief Description of Drawings

[Fig. 1] It depicts a block diagram illustrating a configuration example of a first exemplary embodiment of a visualizing device according to the present invention.
[Figs. 2(a) to 2(b)] They each depict an explanatory diagram illustrating an example of a hierarchical structure.
[Figs. 3(a) to 3(b)] They each depict an explanatory diagram illustrating an example of a category master.
[Fig. 4] It depicts an explanatory diagram illustrating an example of classification target data.
[Fig. 5] It depicts an explanatory diagram illustrating an example of a classification model.
[Fig. 6] It depicts an explanatory diagram illustrating an example of splitting a two-dimensional space into rectangular regions.
[Fig. 7] It depicts an explanatory diagram illustrating an example of allocating the classification target data to the split regions.
[Fig. 8] It depicts an explanatory diagram illustrating an example of processing that specifies a specific region from a multidimensional space.
[Fig. 9] It depicts an explanatory diagram illustrating an example of processing that splits the specific region.
[Fig. 10] It depicts an explanatory diagram illustrating a result example of the processing that splits the specific region.
[Figs. 11(a) to 11 (c)] They each depict an explanatory diagram illustrating an example of processing that displays a boundary for each classification target data.
[Fig. 12] It depicts a flowchart illustrating an operation example of the visualizing device of the first exemplary embodiment.
[Figs. 13(a) to 13(e)] They each depict an explanatory diagram illustrating an operation example of splitting a table along a leaf node from a root node.
[Fig. 14] It depicts a block diagram illustrating a first configuration example of a visualizing system.
[Fig. 15] It depicts an explanatory diagram illustrating an example of a prediction model and a classification model.
[Fig. 16] It depicts an explanatory diagram illustrating an example of visualizing the classification model.
[Fig. 17] It depicts a block diagram illustrating a second configuration example of the visualizing system.
[Fig. 18] It depicts a block diagram illustrating an outline of the visualizing device according to the present invention.
[Fig. 19] It depicts a block diagram illustrating another outline of the visualizing device according to the present invention.
[Fig. 20] It depicts a block diagram illustrating yet another outline of the visualizing device according to the present invention.

### Description of Embodiments

Hereinafter, exemplary embodiments of the present invention will be described with reference to the drawings.

### First exemplary embodiment

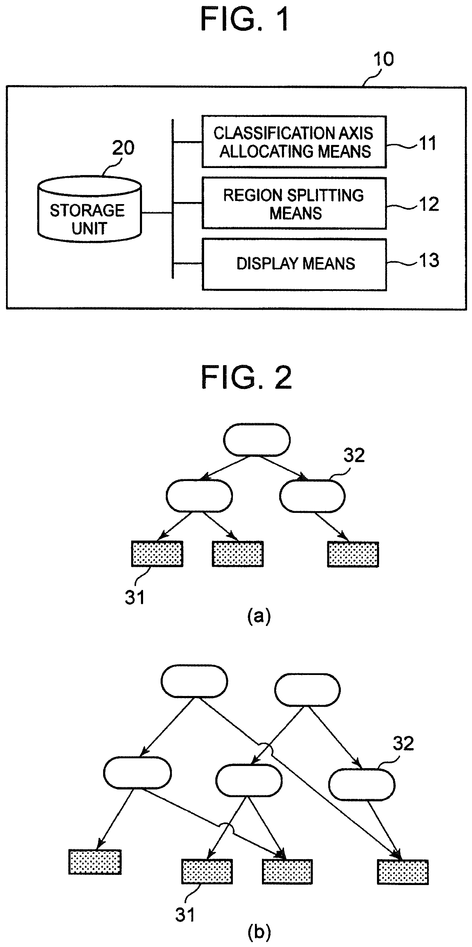

Fig. 1 is a block diagram illustrating a configuration example of a first exemplary embodiment of a visualizing device according to the present invention. A visualizing device 10 of the present exemplary embodiment includes a classification axis allocating means 11, a region splitting means 12, a display means 13, and a storage unit 20.

The storage unit 20 stores information to be used for visualization. In the present exemplary embodiment, a case will be described where the storage unit 20 stores data to be used for visualization; however, the visualizing device 10 may receive the data via a communication network from another device (not illustrated). The storage unit 20 is implemented by a magnetic disk, for example.

The visualizing device 10 of the present exemplary embodiment displays data represented in a hierarchical structure. The hierarchical structure is a structure in which there is a parent-child relationship between classification conditions for classifying the data, and specifically is represented by a tree structure, a plurality of tree structures, a decision tree, and the like. A classification axis indicates a viewpoint for classifying the data, and types of the classification axis are classified into a numerical value type and a category type. The numerical value type is a classification axis whose content is specified by a numerical value, and the category type is a classification axis whose content is specified by a predetermined classification.

Figs. 2(a) to 2(b) are each an explanatory diagram illustrating an example of a hierarchical structure. Classification target data are arranged in leaf nodes 31 illustrated in Figs. 2(a) to 2(b), and data classification conditions (hereinafter, also referred to as branch conditions) based on the classification axes are arranged in nodes 32. Incidentally, the structure illustrated in Fig. 2(a) indicates the tree structure, and the structure illustrated in Fig. 2(b) indicates the plurality of tree structures. In the following description, a model in which data are classified based on such classification conditions is referred to as a classification model. That is, it can be said that the classification model is a model in which classification conditions for classifying classification target data are represented in a hierarchical structure.

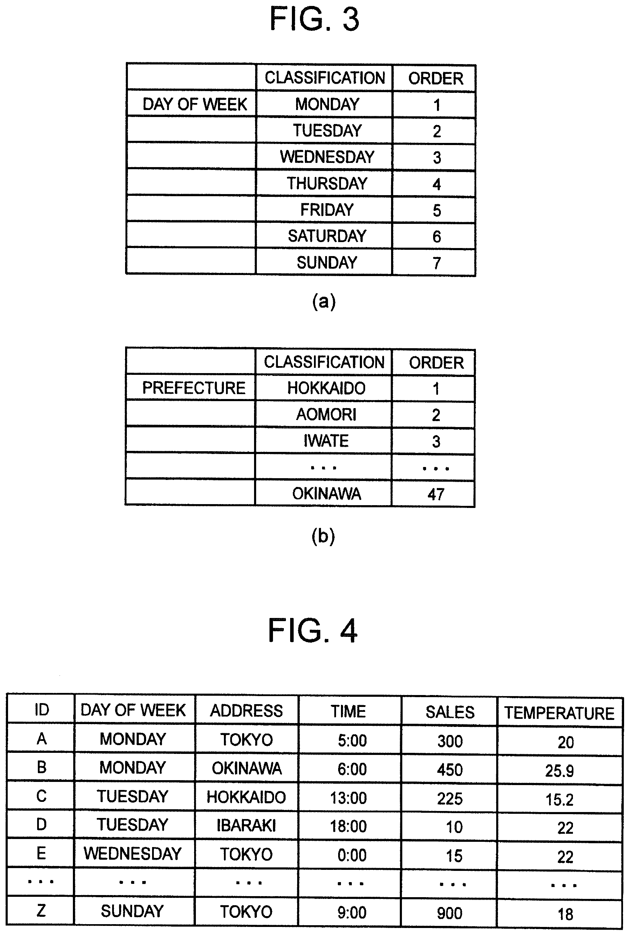

In addition, the storage unit 20 stores the classification included in a category type classification axis. Hereinafter, the entire classification included in the category type classification axis is also referred to as a category master. Figs. 3(a) to 3(b) are each an explanatory diagram illustrating an example of a category master. For example, as illustrated in Fig. 3(a), when the classification axis is "day of week," classifications included in the classification axis are {Monday, Tuesday, Wednesday, Thursday, Friday, Saturday, and Sunday}. In this way, in a case of a category having order (order scale category), the storage unit 20 stores a classification and order of the classification in association with each other.

In addition, as illustrated in Fig. 3(b), when the classification axis is "prefecture," classifications included in the classification axis are {Hokkaido, Aomori, Iwate, ... and, Okinawa}. In this way, in a case of a category not having order (unordered scale category), the storage unit 20 stores an order of a classification defined by any method and the classification in association with each other. In Fig. 3(b), an example is illustrated in which a prefecture code as order is associated with a classification.

Fig. 4 is an explanatory diagram illustrating an example of classification target data. The classification target data each have a value specified by one or more classification axes, as illustrated in Fig. 4. Incidentally, in the present exemplary embodiment, since the classification target data are classified and displayed, it can be said that the classification target data are classified and visualized.

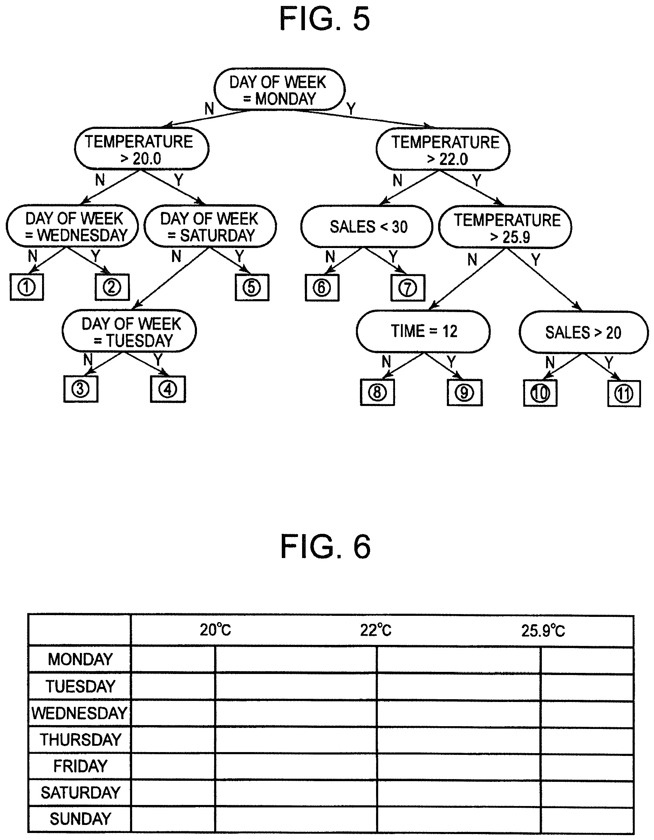

Fig. 5 is an explanatory diagram illustrating an example of a classification model. The classification model illustrated in Fig. 5 indicates an example in which data are classified under classification conditions based on classification axes illustrated in Fig. 4. In addition, in the classification model illustrated in Fig. 5, the content described within the rounded rectangle indicates the classification condition (branch condition), the rectangle represents a set of classification target data, and the number described within the rectangle indicates the number that identifies the set.

The classification axis allocating means 11 allocates classification axes to respective dimensional axes of a multidimensional space in accordance with priority levels of the classification axes. Here, the multidimensional space indicates a space that displays the classification target data. For example, when data are displayed in a two-dimensional space, the classification axis allocating means 11 allocates classification axes separately to the X-axis and Y-axis that are dimensional axes. In addition, when data are displayed in a three-dimensional space, the classification axis allocating means 11 allocates classification axes separately to the X-axis, the Y-axis, and the Z-axis that are dimensional axes.

In the following description, an example will be described in which the classification axis allocating means 11 allocates classification axes to a two-dimensional space that is an example of the multidimensional space. However, the number of dimensions of the multidimensional space is not limited to two dimensions, and may be three or more dimensions. Incidentally, in order to inhibit visualizing accuracy from decreasing, the number of dimensions preferably two dimensions or three dimensions.

First, the classification axis allocating means 11 determines priority levels of the classification axes. Specifically, the classification axis allocating means 11 determines the priority levels so that the priority level of the classification axis becomes higher according as the number of classification axes appearing in the classification condition (node) of the hierarchical structure increases. That is, the classification axis allocating means 11 counts the number of classification axes to be used for the classification conditions, and determines the priority level higher according as the number increases. Then, the classification axis allocating means 11 selects the classification axes for the number of dimensions from the one with the highest priority level, and allocates the selected classification axes separately to the different dimensional axes. Hereinafter, the classification axes for the number of dimensions selected from the one with the highest priority level are referred to as basic classification axes.

In the example illustrated in Fig. 5, as the classification axes, the day of week, temperature, sales, and time are used. In addition, in the example illustrated in Fig. 5, as the classification axes, the day of week appears at four places, the temperature appears at three places, the sales appear at two places, and the time appears at one place. Therefore, the classification axis allocating means 11 sets the higher priority levels in order of the day of week, temperature, sales, and time, and selects two classification axes of the day of week and temperature in order of descending priority levels and allocates them separately to the Y-axis and the X-axis.

Further, the classification axis allocating means 11 also determines dimensional axes to which classification axes other than the basic classification axes are allocated. The classification axis allocating means 11 may allocate the classification axes in order of the priority level so that dimensional axes are evenly allocated, for example. For example, in a case of a two-dimensional space, the classification axis allocating means 11 may alternately allocate the X-axis and the Y-axis in order of higher priority level classification axis.

The region splitting means 12 splits each dimensional axis, based on the type of the classification axis allocated to the dimensional axis. When the type of the classification axis is the numerical value type, the region splitting means 12 splits the dimensional axis at a position corresponding to a value to be used for a condition of the classification axis in the branch condition.

On the other hand, when the type of the classification axis is the category type, the region splitting means 12 acquires classifications included in a category of the classification axis from the category master. Then, the region splitting means 12 splits the dimensional axis for each classification included in the category. At this time, the region splitting means 12 may split the dimensional axis by all the classifications included in the category master, and may split the dimensional axis by "other classifications" in which classifications to be used for a condition of the classification axis in the branch condition, and other classifications are collected.

First, the region splitting means 12 splits each dimensional axis by the basic classification axes. Then, the region splitting means 12 splits the multidimensional space into regions in accordance with the split dimensional axis. For example, when the multidimensional space to be split is a two-dimensional space, the region splitting means 12 outputs a straight line that passes through a position splitting the X-axis and is parallel to the Y-axis, and outputs a straight line that passes through a position splitting the Y-axis and is parallel to the X-axis.

Fig. 6 is an explanatory diagram illustrating an example of splitting a two-dimensional space into rectangular regions. In the example illustrated in Fig. 6, it is indicated that the two-dimensional space in the Y-axis direction is split for each day of week, and the two-dimensional space in the X-axis direction is split at the position corresponding to the value to be used for the temperature condition of the classification conditions of the classification model illustrated in Fig. 5. Such straight lines are output, whereby the two-dimensional space is split into a plurality of rectangular regions.

Next, the region splitting means 12 allocates classification target data to respective regions on the multidimensional space split. For example, in a case of the two-dimensional space, the region splitting means 12 allocates data to rectangular regions specified in accordance with contents of the classification axes indicated by the X-axis and the Y-axis.

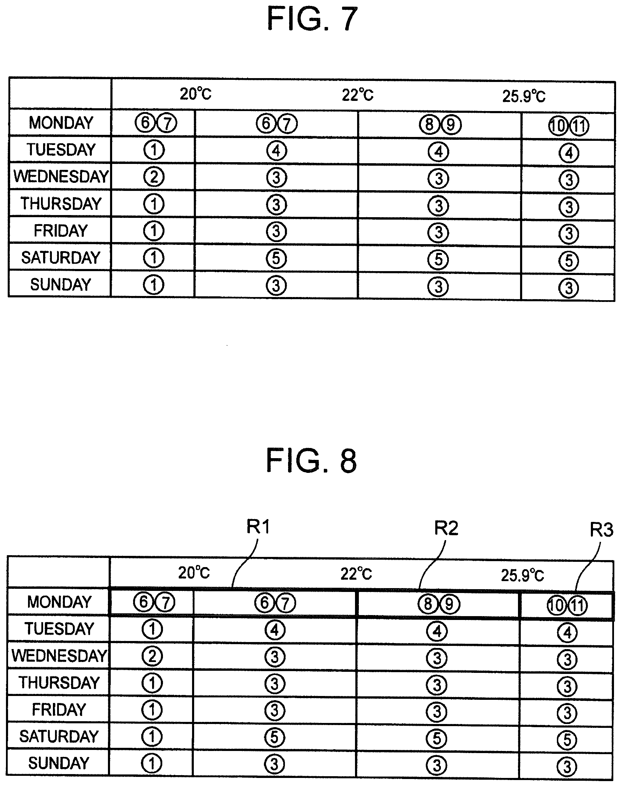

Fig. 7 is an explanatory diagram illustrating an example of allocating the classification target data to the split regions. Fig. 7 illustrates an example in which the classification target data illustrated in Fig. 5 are allocated to the respective regions of the two-dimensional space illustrated in Fig. 6. The visualizing data from No. 1 to No. 5 illustrated in Fig. 5 are each allocated to individual regions. On the other hand, the visualizing data from No. 6 to No. 11 illustrated in Fig. 5 are classified by the classification axes other than the basic classification axes, so that a plurality of visualizing data is allocated in one region.

Next, the region splitting means 12 specifies a region to which a plurality of common classification target data is allocated. Hereinafter, the region to which the plurality of common classification target data is allocated is referred to as a specific region.

Fig. 8 is an explanatory diagram illustrating an example of processing that specifies a specific region from a multidimensional space illustrated in Fig. 7. In the example illustrated in Fig. 8, the visualizing data of No. 6 and No. 7 are allocated to a region R1 that corresponds to "day of week = Monday" and "temperature ≤ 22." Therefore, the region splitting means 12 specifies the region R1 as a specific region. The same applies to a region R2 that corresponds to "day of week = Monday" and "22 < temperature ≤ 25.9," and a region R3 that corresponds to "day of week = Monday" and "25.9 < temperature."

Next, the region splitting means 12 specifies a classification axis in which the classification target data included in the specific region are classified. The region splitting means 12 selects a classification axis with the highest priority level of the specified classification axes. Then, the region splitting means 12 allocates the selected classification axis to the dimensional axis determined by the classification axis allocating means 11, and splits the dimensional axis within the specific region by the allocated classification axis. Then, the region splitting means 12 splits the specific region into regions in accordance with the split dimensional axis.

Incidentally, the method for splitting the dimensional axis by the classification axis is similar to the method for splitting the dimensional axis of the multidimensional space. In addition, the method for splitting the specific region into regions in accordance with the split dimensional axis is similar to the method for splitting the multidimensional space. The region splitting means 12 repeatedly executes processing that splits the region until there is no longer a region (that is, specific region) to which the plurality of classification target data is allocated.

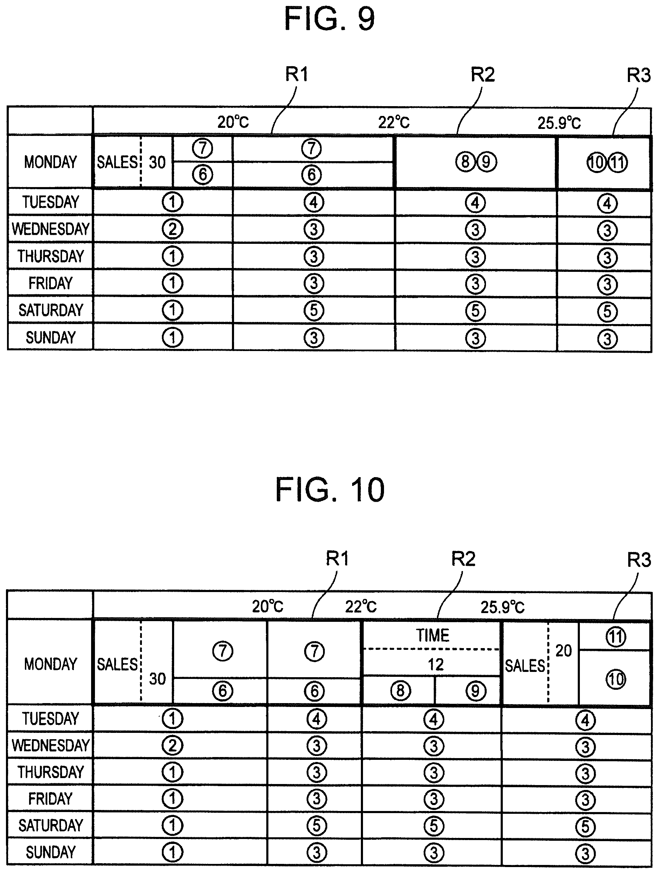

Fig. 9 is an explanatory diagram illustrating an example of processing that splits the specific region illustrated in Fig. 8. In order to classify the visualizing data of No. 6 and the visualizing data of No. 7 illustrated in Fig. 5, it can be classified by the sales condition (specifically, whether or not the sales are greater than 30). Therefore, the region splitting means 12 specifies "sales" as a classification axis in which the classification target data included in the specific region are classified. In the example, since there is one specified classification axis, the region splitting means 12 selects the "sales" as the classification axis with the highest priority level.

Here, it is assumed that the dimensional axis to which the "sales" is allocated has been determined as the Y-axis, by the classification axis allocating means 11. At this time, the region splitting means 12 allocates the classification axis "sales" to the Y-axis, and splits the region R1 by the classification axis "sales." Here, the classification target data is classified by whether or not the sales are greater than 30. Therefore, the region splitting means 12 splits the dimensional axis and the region R1 at a place corresponding to sales = 30.

The region splitting means 12 splits the remaining regions R2 and R3, similarly. Fig. 10 is an explanatory diagram illustrating a result example of the processing that splits the specific region illustrated in Fig. 8. The example illustrated in Fig. 10 is a splitting example in a case where the dimensional axis to which "time" is allocated has been determined as the X-axis, by the classification axis allocating means 11. The splitting processing is repeated until there is no specific region, whereby one item of classification target data is allocated to each region, as illustrated in Fig. 10.

In this way, the region splitting means 12 specifies a classification axis not used for the classification conditions for the classification target data, from a classification axis not allocated by the classification axis allocating means 11, and further splits the region (specific region), based on the type of the specified classification axis, and allocates the classification target data to respective split regions.

Next, the region splitting means 12 displays a boundary for each classification target data. For example, in a case of the two-dimensional space, the region splitting means 12 displays a straight line at a boundary between regions whose contents of the classification target data are different from each other.

Incidentally, the region splitting means 12 may display all boundaries during splitting, and, after completion of data allocating processing, when the data allocated to adjacent regions are the same as each other, delete the boundary between the adjacent regions.

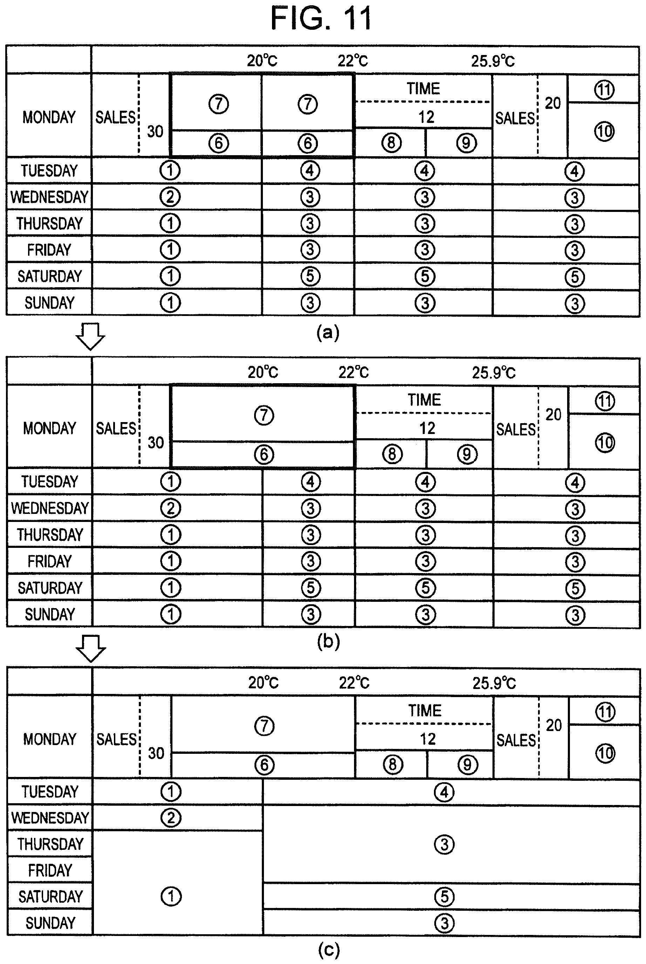

Figs. 11(a) to 11(c) are each an explanatory diagram illustrating an example of processing that displays a boundary for each classification target data. The example illustrated in Fig. 11 (a) illustrates a state in which all lines splitting the region are left. The region splitting means 12, when the data allocated to adjacent regions are the same as each other, deletes the boundary between the adjacent regions. For example, in a thick frame portion of Fig. 11 (a), the straight line splitting at "temperature = 20" is not necessary since the adjacent data are the same as each other. Therefore, the region splitting means 12 deletes the line (see Fig. 11(b)). As a result of performing the processing to all regions, the table illustrated in Fig. 11 (c) is completed.

In this way, the region splitting means 12, when classification target data of adjacent regions are different from each other, displays the boundary between the regions, and, when classification target data of adjacent regions are identical to each other, combines and displays the regions. In other words, when classification target data of adjacent regions are identical to each other, the region splitting means 12 does not display the boundary between the regions.

Incidentally, the space in which the region splitting means 12 displays the data is not limited to a two-dimensional space, and may be a space of three or more dimensions. For example, in a case of three-dimensions, the region splitting means 12 may output a plane that passes through a position splitting the X-axis and is parallel to the Y-axis and the Z-axis, output a straight plane that passes through a position splitting the Y-axis and is parallel to the X-axis and the Z-axis, output a plane that passes through a position splitting the Z-axis and is parallel to the X-axis and the Y-axis, and split the space into rectangular parallelepiped regions.

The display means 13 displays the classification target data to respective regions. The display means 13 may display the classification target data themselves, and may display any information for identifying the classification target data.

The classification axis allocating means 11, the region splitting means 12, and the display means 13 are implemented by a CPU of a computer that operates in accordance with a program (visualizing program). For example, the program is stored in the storage unit 20 of the visualizing device 10, and the CPU may read the program and operate as the classification axis allocating means 11, the region splitting means 12, and the display means 13, in accordance with the program. In addition, each of the classification axis allocating means 11, the region splitting means 12, and the display means 13 may be implemented by a dedicated hardware device.

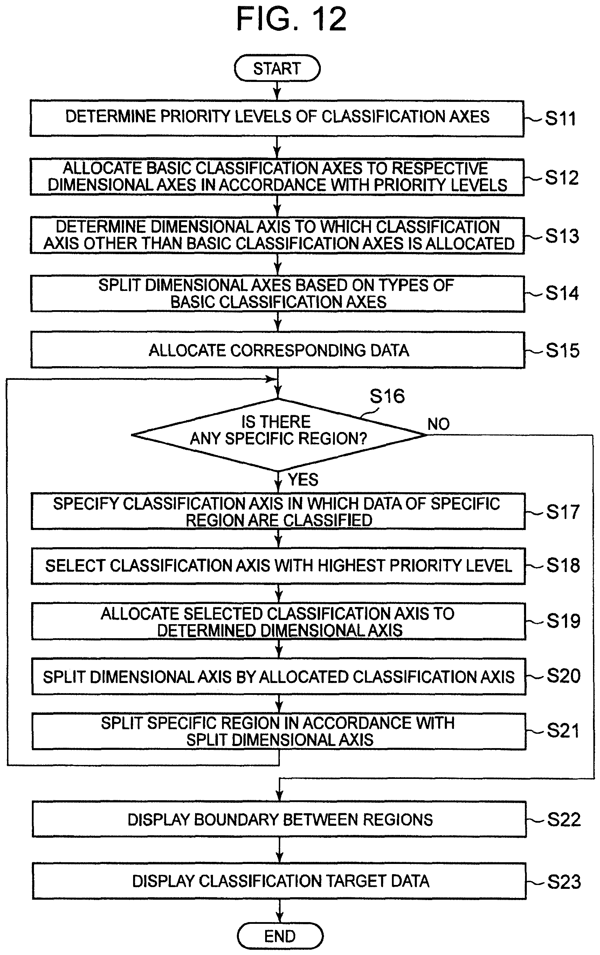

Next, operation will be described of the visualizing device 10 of the present exemplary embodiment. Fig. 12 is a flowchart illustrating an operation example of the visualizing device 10 of the present exemplary embodiment. First, the classification axis allocating means 11 determines priority levels of classification axes that classify classification target data represented in a hierarchical structure (step S11). The classification axis allocating means 11 allocates basic classification axes to respective dimensional axes of a multidimensional space in accordance with the priority levels thereof (step S 12). In addition, the classification axis allocating means 11 determines a dimensional axis to which a classification axis other than the basic classification axes is allocated (step S 13).

Next, the region splitting means 12 splits the dimensional axes, based on the types (category type, numerical value type) of the allocated basic classification axes (step S14). The region splitting means 12 allocates classification target data to respective regions on the multidimensional space to be split in accordance with the split dimensional axes (step S 15).

The region splitting means 12 determines whether or not there is a region to which the plurality of common classification target data (that is, specific region) is allocated (step S16).

When there is the specific region (Yes in step S16), the region splitting means 12 specifies a classification axis in which the classification target data included in the specific region are classified (step S 17), and selects a classification axis with the highest priority level of the specified classification axis (step S18). Then, region splitting means 12 allocates the selected classification axis to the dimensional axis determined by the classification axis allocating means 11 (step S19), and splits the dimensional axis within the specific region by the allocated classification axis (step S20). Then, region splitting means 12 splits the specific region into regions in accordance with the split dimensional axis (step S21). After that, processing of step S16 and subsequent steps is repeated.

On the other hand, when there is no specific region (No in step S16), the region splitting means 12, when classification target data of adjacent regions are different from each other, displays a boundary between the regions, and, when classification target data of adjacent regions are identical to each other, combines and displays the regions (step S22). Then, the display means 13 displays the classification target data allocated to the respective regions of the multidimensional space (step S23).

As described above, in the present exemplary embodiment, the classification axis allocating means 11 allocates classification axes to respective dimensional axes of a multidimensional space in accordance with priority levels of the classification axes to be used for classification conditions, and the region splitting means 12 splits the dimensional axes, based on types of the allocated classification axes, and allocates the classification target data to respective regions on the multidimensional space to be split in accordance with the split dimensional axes. Then, the display means 13 displays the classification target data allocated to the respective regions of the multidimensional space. With such a configuration, a classification relationship between data represented in a hierarchical structure can be visualized so that the classification relationship is easily grasped.

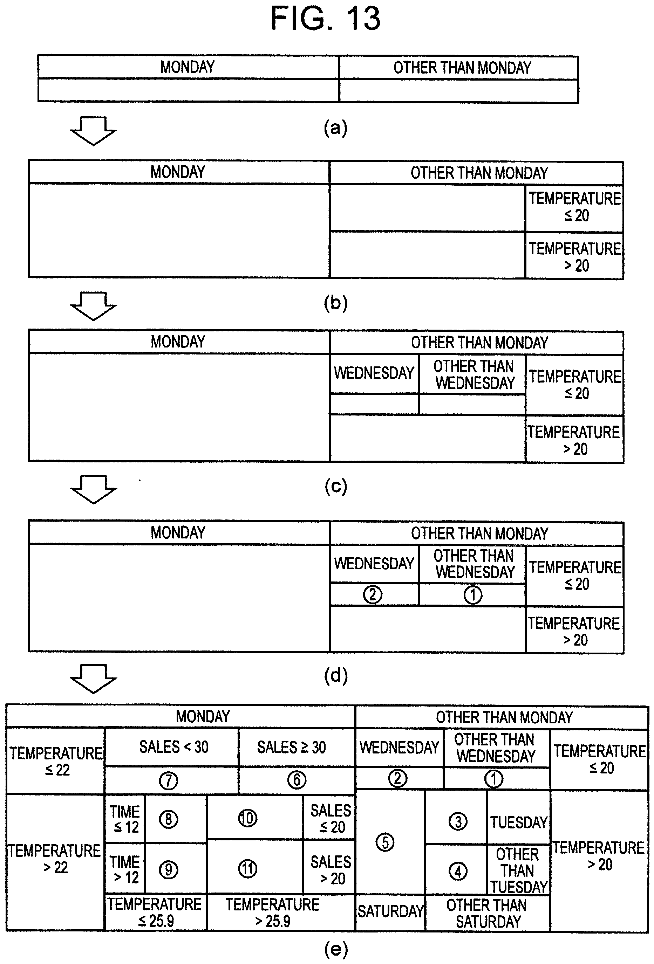

The reason why the classification relationship between data can be easily grasped by visualizing the classification model in this way will be described in comparison with a case of splitting a table in order along a leaf node from a root node. Figs. 13(a) to 13(e) are each an explanatory diagram illustrating an operation example of splitting a table along a leaf node from a root node when the classification model illustrated in Fig. 5 is indicated in a table.

When the table is split in order along a leaf node from a root node, first, a classification condition existing in the root node is selected. In the example illustrated in Fig. 5, "day of week = Monday" is selected. Therefore, a table region is split into regions of "day of week = Monday" and "day of week = other than Monday" (see Fig. 13(a)).

Next, a node that can be traced from the root node is selected. In the example illustrated in Fig. 5, "temperature > 20" is selected. Therefore, the table's region indicating "day of week = other than Monday" is split into "temperature > 20" and "temperature ≤ 20" (see Fig. 13 (b)). Further, the node "day of week = Wednesday" is selected, and the table's region indicating "day of week = other than Monday" and "temperature ≤ 20" is split into regions of "day of week = Wednesday" and "day of week = other than Wednesday" (see Fig. 13(c)).

When a node is further traced, a leaf node is reached, so that visualizing data of No. 1 and No. 2 illustrated in Fig. 5 are each allocated to the split regions (see Fig. 13(d)). Subsequently, as a result of repeating the above-described processing, a splitting result illustrated in Fig. 13(e) is completed.

In the table illustrated in Fig. 13(e), since the same classification axes appear positions on various axes, the relationship between the classified data is unclear. However, the visualizing device 10 of the present exemplary embodiment refers to the entire classification condition and determines a classification axis with high priority level, and splits the table, based on the classification axis with the high priority level. For that reason, in overlooking the classification data, ease of understanding is improved of when the entire classification data is overlooked, in comparison with a case where arrangement is determined based on a trivial axis as the first place, as illustrated in Figs. 13(a) to 13(e).

In addition, in the present exemplary embodiment, the classification axis allocating means 11 determines the dimensional axes to which classification axes are allocated. For that reason, when the specific region is split, it is possible to suppress the same classification axes from appearing in different dimensional axis directions, so that ease of understanding is improved of when the entire classification data is overlooked.

### Second exemplary embodiment

Next, a second exemplary embodiment will be described of the visualizing device according to the present invention. The visualizing device of the present exemplary embodiment visualizes a plurality of components to be used for predicting input data. Specifically, the visualizing device classifies a plurality of prediction models to be selected and used by a predictor, and visualizes them. In the present exemplary embodiment, it is assumed that the prediction models to be used for predicting the input data are selected in accordance with contents of the input data, and the input data is predicted by using the selected prediction models. That is, the prediction models are selected in accordance with the contents of the input data, so that the plurality of prediction models can be classified in accordance with the contents of the input data. Incidentally, the prediction models can be said to be components.

Here, the contents of the input data can be specified for each classification axis, and conditions for selecting the prediction models also can be set for each classification axis. Therefore, the classification target data in the first exemplary embodiment correspond to the prediction models of the present exemplary embodiment, and the classification conditions in the first exemplary embodiment correspond to the conditions for selecting the prediction models of the present exemplary embodiment. That is, the visualizing device of the present exemplary embodiment visualizes the classification model in which selection conditions of the prediction models are the classification conditions, and the prediction models are the classification target data.

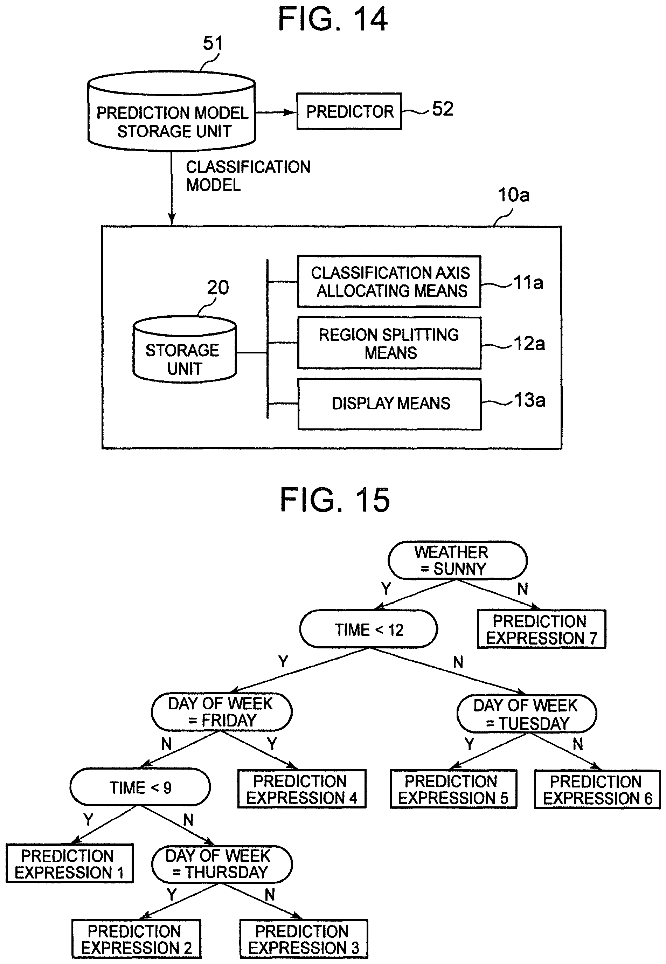

Fig. 14 is a block diagram illustrating a first configuration example of a visualizing system using the visualizing device according to the present invention. The visualizing system of the present exemplary embodiment includes a prediction model storage unit 51, a predictor 52, and a visualizing device 10a. The visualizing device 10a used in the present exemplary embodiment is similar to the visualizing device 10 of the first exemplary embodiment.

Incidentally, a classification axis allocating means 11 a, a region splitting means 12a, and a display means 13 a are implemented by a CPU of a computer that operates in accordance with a program (visualizing program).

The prediction model storage unit 51 stores the plurality of prediction models to be used for prediction by the predictor 52, and a classification model in which the prediction models are classified. Incidentally, a storage unit 20 may store the prediction models and the classification model.

The predictor 52 selects the prediction models in accordance with the input data, and predicts the input data by using the prediction models.

Fig. 15 is an explanatory diagram illustrating an example of a prediction model and a classification model. The example in Fig. 15 illustrates that a classification model is generated in which prediction expressions corresponding to prediction models are separately allocated to leaf nodes, and conditions to apply the prediction models (prediction expressions) are allocated to the respective nodes.

The visualizing device 10a, similarly to the first exemplary embodiment, displays the classification model in a multidimensional space. First, the classification axis allocating means 11 a extracts classification axes to be used for conditions from a classification model classified by the conditions for selecting the components to be used for prediction. Then, the classification axis allocating means 11 a displays the extracted classification axes in association with any of dimensional axes of the multidimensional space that displays the components. Incidentally, the method for associating the extracted classification axes to the respective dimensional axes is similar to the method performed by the classification axis allocating means 11 of the first exemplary embodiment.

Incidentally, the conditions for selecting the components are represented by relationships to values indicated by the classification axes. Then, the classification axes are extracted with greater frequency of use as the conditions for the number of dimensions, among the classification axes included in the conditions, and are allocated separately to the different dimensional axes.

The region splitting means 12a allocates classifications or values of the classification axes to the dimensional axes split in accordance with types of the associated classification axes and displays the dimensional axes and the classifications or the values. The method for splitting the dimensional axis in accordance with the type of the classification axis is similar to the method performed by the region splitting means 12 of the first exemplary embodiment. Specifically, the region splitting means 12a displays a condition for a certain classification axis and a condition for another classification axis on any of the dimensional axes on the multidimensional space.

The display means 13a displays components that meet the conditions for selection, in regions on the multidimensional space specified by the classifications or the values of the classification axes allocated to the respective classification axes. Incidentally, the method for displaying the components is similar to the method performed by the display means 13 of the first exemplary embodiment. Specifically, the display means 13a displays components to be applied to input data that satisfy all of one or more conditions corresponding to the dimensional axes, in a region determined by the classification axes in the respective dimensional axes, in the multidimensional space.

Hereinafter, a method for visualizing a classification model illustrated in Fig. 15 will be described. First, the classification axis allocating means 11 a extracts classification axes to be used for the conditions from the classification model illustrated in Fig. 15. In the classification model illustrated in Fig. 15, weather, time, and day of week are extracted as the classification axes. Next, the classification axis allocating means 11 a determines priority levels of the classification axes. In the example illustrated in Fig. 15, the day of week appears at three places, the time appears at two places, and the weather appears at one place. Therefore, the classification axis allocating means 11 a determines the priority levels in order of the day of week, the time, and the weather. Here, the classification axis allocating means 11 a allocates the day of week with the highest priority level to the X-axis, and allocates the time with the second highest priority level to the Y-axis. In addition, the classification axis allocating means 11 a also determines the dimensional axis to be allocated for the remaining classification axis. Here, the classification axis allocating means 11a determines to allocate the weather to the X-axis.

Next, the region splitting means 12a splits the X-axis by the classification of the day of week, splits the Y-axis by the value used for the classification condition, and allocates each classification and value and displays them.

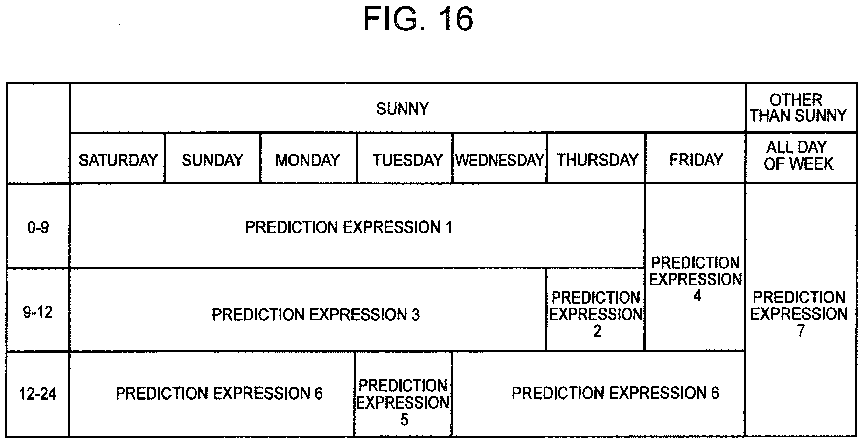

The display means 13a allocates the prediction expressions to respective regions on the multidimensional space specified by the classifications or the values of the classification axes allocated to the respective classification axes. At this time, the display means 13a, when prediction expressions of adjacent regions are the same as each other, deletes the boundary and displays the regions. Fig. 16 is an explanatory diagram illustrating an example of visualizing the classification model illustrated in Fig. 15. As a result of splitting the regions, based on the above procedure, the table illustrated in Fig. 16 is completed.

As described above, in the present exemplary embodiment, the classification axis allocating means 11 a extracts the classification axes to be used for the conditions from the classification model classified by the conditions for selecting the components to be used for prediction, and displays the classification axes in association with any of dimensional axis of the multidimensional space that displays the components. In addition, the region splitting means 12a allocates the classifications or the values of the classification axes to the dimensional axes split in accordance with the types of the associated classification axes and displays the dimensional axes and the classifications or the values. Then, the display means 13a displays the components that meet the conditions for selection, in regions on the multidimensional space specified by the classifications or the values of the classification axes allocated to the respective classification axes.

Accordingly, similarly to the first exemplary embodiment, a classification relationship between data represented in a hierarchical structure can be visualized so that the classification relationship is easily grasped. For example, the classification model represented in a tree structure illustrated in Fig. 15 is compared with the classification model represented in tabular form illustrated in Fig. 16. For the dimensional axis "day of week" used under many branch conditions, for example, a case is assumed of grasping the prediction expression to be used in the case of "day of week = Tuesday." In this case, it is very difficult to grasp the prediction expression to be used in the case of the above condition from the tree structure illustrated in Fig. 15 since it is necessary to follow the conditions of the day of week that exist in many branch conditions. On the other hand, as in the present exemplary embodiment, by representing in tabular form in which the classification axis used in many branch conditions is set to one of the dimensional axes, it is possible to easily grasp that the prediction expressions used in the case of "day of week = Tuesday" are prediction expression 1, prediction expression 3, and prediction expression 5.

### Third exemplary embodiment

Next, a third exemplary embodiment will be described of the visualizing device according to the present invention. The visualizing device of the present exemplary embodiment visualizes a plurality of components calculated based on learning data being a set of a plurality of samples. In the present exemplary embodiment, it is assumed that a plurality of prediction models and a classification model classified by conditions under which the samples are applied to prediction models are generated as a learning result of a learning device, and the visualizing device applies the classification conditions of the classification model to classification axes and displays the prediction models as classification target data.

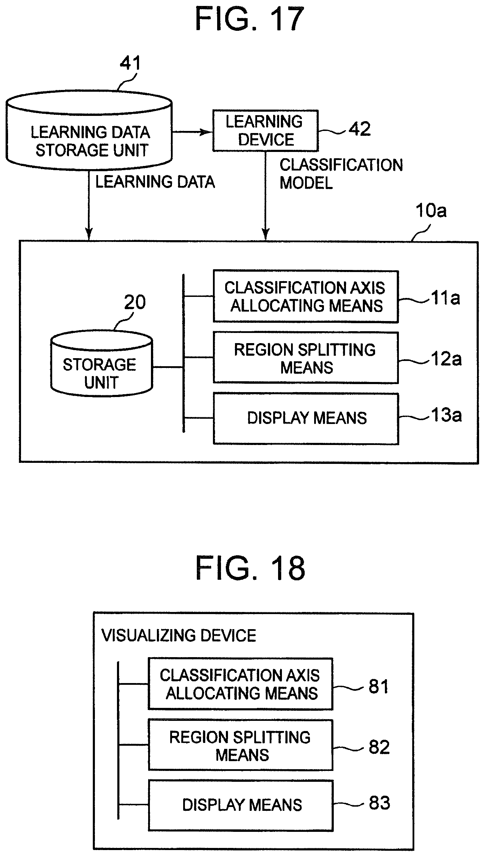

Fig. 17 is a block diagram illustrating a second configuration example of the visualizing system using the visualizing device according to the present invention. The visualizing system of the present exemplary embodiment includes a learning data storage unit 41, a learning device 42, and a visualizing device 10b. The visualizing device 10b used in the present exemplary embodiment is also similar to the visualizing device 10 of the first exemplary embodiment.

The learning data storage unit 41 stores learning data being a set of a plurality of samples. The learning data is data that can be classified by any classification axis.

The learning device 42 generates the prediction models, based on the learning data stored in the learning data storage unit 41. The learning device 42 of the present exemplary embodiment generates the plurality of prediction models and a classification model that classifies the prediction models.

The visualizing device 10b, similarly to the first exemplary embodiment, displays the classification model in a multidimensional space. First, the classification axis allocating means 11b extracts classification axes to be used for conditions from the classification model classified by the conditions under which the samples are applied to the prediction models. Then, the classification axis allocating means 11b displays the extracted classification axes in association with any of dimensional axes of the multidimensional space that displays the components. Incidentally, the method for associating the extracted classification axes to the respective dimensional axes is similar to the method performed by the classification axis allocating means 11 of the first exemplary embodiment.

The region splitting means 12b allocates classifications or values of the classification axes to the dimensional axes split in accordance with types of the associated classification axes and displays the dimensional axes and the classifications or the values. The method for splitting the dimensional axis in accordance with the type of the classification axis is similar to the method performed by the region splitting means 12 of the first exemplary embodiment.

The display means 13b displays the components that meet the conditions under which the samples are applied, in regions on the multidimensional space specified by the classifications or the values of the classification axes allocated to the respective classification axes. Incidentally, the method for displaying the components is similar to the method performed by the display means 13 of the first exemplary embodiment.

In addition, the display means 13b may display information on the number of samples that meet the conditions of the classification axes in addition to the components that meet the conditions under which the samples are applied, in the regions on the multidimensional space specified by the classifications or the values of the classification axes allocated to the respective classification axes. Specifically, the display means 13b may display the number of samples as it is, and may change color, density, brightness, and the like in accordance with the number of samples and display them.

In addition, the display means 13b may display information on accuracy of the components in addition to the components that meet the conditions under which the samples are applied, in the regions on the multidimensional space specified by the classifications or the values of the classification axes allocated to the respective classification axes.

For example, when the learning device 42 generates the classification model illustrated in Fig. 15, the visualizing device 10b may generate the table illustrated in Fig. 16 by a similar procedure to that of the second exemplary embodiment.

Incidentally, a classification axis allocating means 11b, a region splitting means 12b, and a display means 13b are implemented by a CPU of a computer that operates in accordance with a program (visualizing program).

As described above, in the present exemplary embodiment, the classification axis allocating means 11b extracts the classification axes to be used for the conditions from the classification model classified by the conditions under which the samples are applied to the components, and displays the classification axes in association with any of the dimensional axes of the multidimensional space that displays the components. In addition, the region splitting means 12b allocates the classifications or the values of the classification axes to the dimensional axes split in accordance with the types of the associated classification axes and displays the dimensional axes and the classifications or the values. Then, the display means 13b displays the components that meet the conditions under which the samples are applied, in the regions on the multidimensional space specified by the classifications or the values of the classification axes allocated to the respective classification axes.

Accordingly, similarly to the first exemplary embodiment, a classification relationship between data represented in a hierarchical structure can be visualized so that the classification relationship is easily grasped.

Next, an outline of the present invention will be described. Fig. 18 is a block diagram illustrating an outline of the visualizing device according to the present invention. The visualizing device according to the present invention is a visualizing device (for example, visualizing device 10) that visualizes a classification model in which classification conditions for classifying classification target data are represented in a hierarchical structure, and includes: a classification axis allocating means 81 (for example, the classification axis allocating means 11) that allocates classification axes to respective dimensional axes of a multidimensional space in accordance with priority levels (for example, the number of classification axes to be used for the classification conditions of the classification model) of the classification axes to be used for the classification conditions; a region splitting means 82 (for example, the region splitting means 12) that splits the dimensional axes, based on types of the allocated classification axes and allocates the classification target data to respective regions on the multidimensional space to be split in accordance with the split dimensional axes; and a display means 83 (for example, the display means 13) that displays the classification target data allocated to the respective regions of the multidimensional space.

With such a configuration, a classification relationship between data represented in a hierarchical structure can be visualized so that the classification relationship is easily grasped.

In addition, the region splitting means 82, when classification target data of adjacent regions are different from each other, may display a boundary between the regions, and, when classification target data of adjacent regions are identical to each other, may combine and display the regions. With such a configuration, since ranges become clear of the conditions under which the classification target data are classified, it can be visualized so that grasp of the classification relationship becomes easier.

In addition, the region splitting means 82, when the types of the classification axes indicate categories, may split the dimensional axes in accordance with classifications included in the categories, and, when the types of the classification axes indicate numerical values, may split the dimensional axes at positions corresponding to values indicated in the classification conditions of the classification axes. With such a configuration, even when the types of the classification axes are different from each other, grasp of the classification relationship can be made easier.

In addition, the classification axis allocating means 81 may determine the priority levels of the classification axes higher according as the number of classification axes appearing in nodes of the hierarchical structure increases. With such a configuration, a classification axis used for more classifications can be mainly displayed, so that the classification relationship becomes easier to be seen.

In addition, the region splitting means 82 may specify a classification axis not used for the classification conditions for the classification target data, from a classification axis not allocated by the classification axis allocating means 81, split a region to which the classification target data is allocated, based on a type of the specified classification axis, and allocate the classification target data to respective split regions. With such a configuration, data classified by a plurality of conditions can be appropriately visualized.

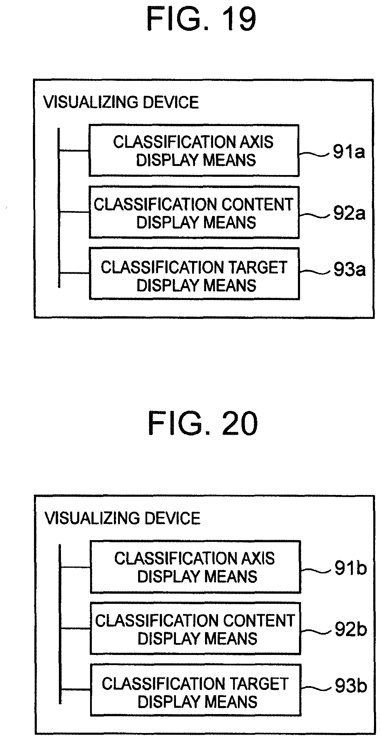

Fig. 19 is a block diagram illustrating another outline of the visualizing device according to the present invention. The visualizing device illustrated in Fig. 19 is a visualizing device (for example, the visualizing device 10a) that visualizes a plurality of components to be used for predicting input data, and includes: a classification axis display means 91 a (for example, the classification axis allocating means 11 a) that extracts classification axes to be used for conditions from a classification model classified by the conditions for selecting the components to be used for prediction, and displays the classification axes in association with any of dimensional axes of a multidimensional space that displays the components; a classification content display means 92a (for example, the region splitting means 12a) that allocates classifications or values of the classification axes to the dimensional axes split in accordance with types of the associated classification axes and displays the dimensional axes and the classifications or the values; and a classification target display means 93a (for example, display means 83a) that displays the components that meet the conditions for selection, in regions on the multidimensional space specified by the classifications or the values of the classification axes allocated to the respective classification axes.

Also with such a configuration, the classification relationship between data (components) represented in a hierarchical structure can be visualized so that the classification relationship is easily grasped.

In addition, the conditions for selecting the components are represented by relationships to values indicated by the classification axes, and the classification axis display means 91 a may extract the classification axes with greater frequency of use as the conditions for the number of dimensions, among the classification axes included in the conditions, and allocate the classification axes separately to the different dimensional axes.

In addition, the classification content display means 92a may display a condition for a certain classification axis and a condition for another classification axis on any of the dimensional axes on the multidimensional space. Then, the classification target display means 93 may display components to be applied to input data that satisfy all of one or more conditions corresponding to the dimensional axes, in a region determined by the classification axes in the respective dimensional axes, in the multidimensional space.

Fig. 20 is a block diagram illustrating yet another outline of the visualizing device according to the present invention. The visualizing device illustrated in Fig. 20 is a visualizing device (for example, the visualizing device 10b) that visualizes a plurality of components calculated based on learning data being a set of a plurality of samples, and includes: a classification axis display means 91b (for example, the classification axis allocating means 11b) that extracts classification axes to be used for conditions from a classification model classified by the conditions under which the samples are applied to the components, and displays the classification axes in association with any of dimensional axes of a multidimensional space that displays the components; a classification content display means 92b (for example, the region splitting means 12b) that allocates classifications or values of the classification axes to the dimensional axes split in accordance with types of the associated classification axes and displays the dimensional axes and the classifications or the values; and a classification target display means 93b (for example, the display means 83b) that displays components that meet the conditions under which the samples are applied, in regions on the multidimensional space specified by the classifications or the values of the classification axes allocated to the respective classification axes.

Also with such a configuration, the classification relationship between data (components) represented in a hierarchical structure can be visualized so that the classification relationship is easily grasped.

The classification target display means 93b may display information on the number of samples that meet the conditions of the classification axes together with the components that meet the conditions under which the samples are applied, in the regions on the multidimensional space specified by the classifications or the values of the classification axes allocated to the respective classification axes.

In addition, the classification target display means 93b may display information on accuracy of the components together with the components that meet the conditions under which the samples are applied, in the regions on the multidimensional space specified by the classifications or the values of the classification axes allocated to the respective classification axes.

Some or all of the above exemplary embodiments can also be described as the following supplementary notes but are not limited thereto.

### (Supplementary note 1)

A visualizing method that visualizes a plurality of components to be used for predicting input data, the visualizing method including: extracting classification axes to be used for conditions from the classification model classified by the conditions for selecting components to be used for prediction, and displaying the classification axes in association with any of dimensional axes of a multidimensional space that displays the components; allocating classifications or values of the classification axes to the dimensional axes split in accordance with types of the associated classification axes and displaying the dimensional axes and the classifications or the values; and displaying the components that meet the conditions for selection, in regions on the multidimensional space specified by the classifications or the values of the classification axes allocated to the respective classification axes.

Incidentally, the visualizing method is used, for example, in a device that visualizes a gate function together with a predictor, with a table.

### (Supplementary note 2)

The visualizing method according to supplementary note 2, wherein the conditions for selecting the components are represented by relationships to values indicated by the classification axes, and the classification axes are extracted with greater frequency of use as the conditions for the number of dimensions, among the classification axes included in the conditions, and the classification axes are allocated separately to the different dimensional axes.

### (Supplementary note 3)

The visualizing method according to supplementary note 1 or supplementary note 2, wherein a condition for a certain classification axis and a condition for another classification axis are displayed on any of the dimensional axes on the multidimensional space, and components to be applied to input data that satisfy all of one or more conditions corresponding to the dimensional axes is displayed in a region determined by the classification axes in the respective dimensional axes, in the multidimensional space.

### (Supplementary note 4)

A visualizing method that visualizes a plurality of components calculated based on learning data being a set of a plurality of samples, the visualizing method including: extracting classification axes to be used for conditions from a classification model classified by the conditions under which the samples are applied to the components, and displaying the classification axes in association with any of dimensional axes of a multidimensional space that displays the components; allocating classifications or values of the classification axes to dimensional axes split in accordance with types of the associated classification axes and displaying the dimensional axes and the classifications or the values; and displaying the components that meet the conditions under which the samples are applied, in regions on the multidimensional space specified by the classifications or the values of the classification axes allocated to the respective classification axes.

Incidentally, the visualizing method is used, for example, in a device that visualizes a gate function together with a learning device, with a table.

### (Supplementary note 5)

The visualizing method according to supplementary note 4, wherein information on the number of samples that meet the conditions of the classification axes is displayed together with the components that meet the conditions under which the samples are applied, in the regions on the multidimensional space specified by the classifications or the values of the classification axes allocated to the respective classification axes.

### (Supplementary note 6)

The visualizing method according to supplementary note 4 or supplementary note 5, wherein the classification target display means displays information on accuracy of the components together with the components that meet the conditions under which the samples are applied, in the regions on the multidimensional space specified by the classifications or the values of the classification axes allocated to the respective classification axes.

### (Supplementary note 7)

A visualizing program to be applied to a computer that visualizes a plurality of components to be used for predicting input data, the visualizing program causing the computer to execute: classification axis display processing that extracts classification axes to be used for conditions from the classification model classified by the conditions for selecting the components to be used for prediction, and displays the classification axes in association with any of dimensional axes of a multidimensional space that displays the components; classification content display processing that allocates classifications or values of the classification axes to dimensional axes split in accordance with types of the associated classification axes and displays the dimensional axes and the classifications or the values; and classification target display processing that displays components that meet the conditions for selection, in regions on the multidimensional space specified by the classifications or the values of the classification axes allocated to the respective classification axes.

### (Supplementary note 8)

The visualizing program according to supplementary note 7, wherein the conditions for selecting the components are represented by relationships to values indicated by the classification axes, and the computer is caused, in the classification axis display processing, to extract the classification axes with greater frequency of use as the conditions for the number of dimensions, among the classification axes included in the conditions, and allocate the classification axes separately to the different dimensional axes.

### (Supplementary note 9)

The visualizing program according to supplementary note 7 or supplementary note 8, causing the computer, in the classification content display processing, to display a condition for a certain classification axis and a condition for another classification axis on any of the dimensional axes on the multidimensional space, and, in the classification target display processing, to display components to be applied to input data that satisfy all of one or more conditions corresponding to the dimensional axes, in a region determined by the classification axes in the respective dimensional axes, in the multidimensional space.

### (Supplementary note 10)

A visualizing program to be applied to a computer that visualizes a plurality of components calculated based on learning data being a set of a plurality of samples, the visualizing program causing the computer to execute: classification axis display processing that extracts classification axes to be used for conditions from a classification model classified by the conditions under which the samples are applied to the components, and displays the classification axes in association with any of dimensional axes of a multidimensional space that displays the components; classification content display processing that allocates classifications or values of the classification axes to dimensional axes split in accordance with types of the associated classification axes and displays the dimensional axes and the classifications or the values; and classification target display processing that displays the components that meet the conditions under which the samples are applied, in regions on the multidimensional space specified by the classifications or the values of the classification axes allocated to the respective classification axes.

### (Supplementary note 11)

The visualizing program according to supplementary note 19, causing the computer, in the classification target display processing, to display information on the number of samples that meet the conditions of the classification axes together with the components that meet the conditions under which the samples are applied, in the regions on the multidimensional space specified by the classifications or the values of the classification axes allocated to the respective classification axes.

### (Supplementary note 12)

The visualizing program according to supplementary note 10 or claim 11, causing the computer, in the classification target display processing, to display information on accuracy of the components together with the components that meet the conditions under which the samples are applied, in the regions on the multidimensional space specified by the classifications or the values of the classification axes allocated to the respective classification axes.

In the above, the present invention has been described with reference to exemplary embodiments and examples; however, the present invention is not limited to the exemplary embodiments and examples described above. Various modifications that can be understood by those skilled in the art within the scope of the present invention can be made to the configuration and details of the present invention.

This application claims priority based on Japanese Patent Application No. 2014-234277 filed on November 19, 2014, the disclosure of which is incorporated herein in its entirety.

### Reference Signs List

- 10, 10a, 10b: Visualizing device
- 11, 11a, 11b: Classification axis allocating means
- 12, 12a, 12b: Region splitting means
- 13, 13a, 13b: Display means
- 20: Storage unit
- 41: Learning data storage unit
- 42: Learning device
- 51: Prediction model storage unit
- 52: Predictor

## Claims

1. A visualizing device that visualizes a classification model in which classification conditions for classifying classification target data are represented in a hierarchical structure,
the visualizing device comprising:
a classification axis allocating means that allocates classification axes to respective dimensional axes of a multidimensional space in accordance with priority levels of the classification axes to be used for the classification conditions;
a region splitting means that splits the dimensional axes, based on types of the allocated classification axes, and allocates the classification target data to respective regions on the multidimensional space to be split in accordance with the split dimensional axes; and
a display means that displays the classification target data allocated to the respective regions of the multidimensional space.

2. The visualizing device according to claim 1, wherein
the region splitting means, when classification target data of adjacent regions are different from each other, displays a boundary between the regions, and, when classification target data of adjacent regions are identical to each other, combines and displays the regions.

3. The visualizing device according to claim 1 or claim 2, wherein, when the types of the classification axes indicate categories, the region splitting means splits the dimensional axes in accordance with classifications included in the categories, and, when the types of the classification axes indicate numerical values, the region splitting means splits the dimensional axes at positions corresponding to values indicated in the classification conditions of the classification axes.

4. The visualizing device according to any one of claim 1 to claim 3, wherein
the classification axis allocating means determines the priority levels of the classification axes higher according as the number of classification axes appearing in nodes of the hierarchical structure increases.

5. The visualizing device according to any one of claim 1 to claim 4, wherein
the region splitting means specifies a classification axis not used for the classification conditions for the classification target data, from a classification axis not allocated by the classification axis allocating means, splits a region to which the classification target data is allocated, based on a type of the specified classification axis, and allocates the classification target data to respective split regions.

6. A visualizing device that visualizes a plurality of components to be used for predicting input data,
the visualizing device comprising:
a classification axis display means that extracts classification axes to be used for conditions from a classification model classified by the conditions for selecting the components to be used for prediction, and displays the classification axes in association with any of dimensional axes of a multidimensional space that displays the components;
a classification content display means that allocates classifications or values of the classification axes to the dimensional axes split in accordance with types of the associated classification axes and displays the classifications or the values of the classification axes; and
a classification target display means that displays the components that meet the conditions for selection, in regions on the multidimensional space specified by the classifications or the values of the classification axes allocated to the respective classification axes.

7. The visualizing device according to claim 6, wherein
the conditions for selecting the components are represented by relationships to values indicated by the classification axes, and
the classification axis display means extracts the classification axes with greater frequency of use as the conditions for the number of dimensions, among the classification axes included in the conditions, and allocates the classification axes each to the different dimensional axes.

8. The visualizing device according to claim 6 or claim 7, wherein
the classification content display means displays a condition for a certain classification axis and a condition for another classification axis on any of the dimensional axes on the multidimensional space, and
the classification target display means displays components to be applied to input data that satisfy all of one or more conditions corresponding to the dimensional axes, in a region determined by the classification axes in the respective dimensional axes, in the multidimensional space.

9. A visualizing device that visualizes a plurality of components calculated based on learning data being a set of a plurality of samples,
the visualizing device comprising:
a classification axis display means that extracts classification axes to be used for conditions from a classification model classified by the conditions under which the samples are applied to the components, and displays the classification axes in association with any of dimensional axes of a multidimensional space that displays the components;
a classification content display means that allocates classifications or values of the classification axes to the dimensional axes split in accordance with types of the associated classification axes and displays the classifications or the values of the classification axes; and
a classification target display means that displays the components that meet the conditions under which the samples are applied, in regions on the multidimensional space specified by the classifications or the values of the classification axes allocated to the respective classification axes.

10. The visualizing device according to claim 9, wherein
the classification target display means displays information on the number of samples that meet the conditions of the classification axes together with the components that meet the conditions under which the samples are applied, in the regions on the multidimensional space specified by the classifications or the values of the classification axes allocated to the respective classification axes.

11. The visualizing device according to claim 9 or claim 10, wherein
the classification target display means displays information on accuracy of the components together with the components that meet the conditions under which the samples are applied, in the regions on the multidimensional space specified by the classifications or the values of the classification axes allocated to the respective classification axes.

12. A visualizing method that visualizes a classification model in which classification conditions for classifying classification target data are represented in a hierarchical structure,
the visualizing method comprising:
allocating classification axes to respective dimensional axes of a multidimensional space in accordance with priority levels of the classification axes to be used for the classification conditions;
splitting the dimensional axes, based on types of the allocated classification axes, and allocating the classification target data to respective regions on the multidimensional space to be split in accordance with the split dimensional axes; and
displaying the classification target data allocated to the respective regions of the multidimensional space.

13. The visualizing method according to claim 12, wherein,
when classification target data of adjacent regions are different from each other, a boundary between the regions is displayed, and, when classification target data of adjacent regions are identical to each other, the regions are combined and displayed.

14. A visualizing method that visualizes a plurality of components to be used for predicting input data,
the visualizing method comprising:
extracting classification axes to be used for conditions from the classification model classified by the conditions for selecting components to be used for prediction, and displaying the classification axes in association with any of dimensional axes of a multidimensional space that displays the components;
allocating classifications or values of the classification axes to the dimensional axes split in accordance with types of the associated classification axes and displaying the classifications or the values of the classification axes; and
displaying the components that meet the conditions for selection, in regions on the multidimensional space specified by the classifications or the values of the classification axes allocated to the respective classification axes.

15. The visualizing method according to claim 14, wherein
the conditions for selecting the components are represented by relationships to values indicated by the classification axes, and
the classification axes are extracted with greater frequency of use as the conditions for the number of dimensions, among the classification axes included in the conditions, and the classification axes are each allocated to the different dimensional axes.

16. A visualizing method that visualizes a plurality of components calculated based on learning data being a set of a plurality of samples,
the visualizing method comprising:
extracting classification axes to be used for conditions from a classification model classified by the conditions under which the samples are applied to the components, and displaying the classification axes in association with any of dimensional axes of a multidimensional space that displays the components;
allocating classifications or values of the classification axes to dimensional axes split in accordance with types of the associated classification axes and displaying the classifications or the values of the classification axes; and
displaying the components that meet the conditions under which the samples are applied, in regions on the multidimensional space specified by the classifications or the values of the classification axes allocated to the respective classification axes.

17. The visualizing method according to claim 16, wherein
information on the number of samples that meet the conditions of the classification axes is displayed together with the components that meet the conditions under which the samples are applied, in the regions on the multidimensional space specified by the classifications or the values of the classification axes allocated to the respective classification axes.

18. A visualizing program to be applied to a computer that visualizes a classification model in which classification conditions for classifying classification target data are represented in a hierarchical structure,
the visualizing program causing the computer to execute:
classification axis allocating processing that allocates classification axes to respective dimensional axes of a multidimensional space in accordance with priority levels of the classification axes to be used for the classification conditions;
region splitting processing that splits the dimensional axes, based on types of the allocated classification axes, and allocates the classification target data to respective regions on the multidimensional space to be split in accordance with the split dimensional axes; and
display processing that displays the classification target data allocated to the respective regions of the multidimensional space.

19. The visualizing program according to claim 18, causing the computer,
in the region splitting processing, when classification target data of adjacent regions are different from each other, to display a boundary between the regions, and, when classification target data of adjacent regions are identical to each other, to combine and display the regions.

20. A visualizing program to be applied to a computer that visualizes a plurality of components to be used for predicting input data,
the visualizing program causing the computer to execute:
classification axis display processing that extracts classification axes to be used for conditions from the classification model classified by the conditions for selecting the components to be used for prediction, and displays the classification axes in association with any of dimensional axes of a multidimensional space that displays the components;
classification content display processing that allocates classifications or values of the classification axes to dimensional axes split in accordance with types of the associated classification axes and displays the classifications or the values of the classification axes; and
classification target display processing that displays components that meet the conditions for selection, in regions on the multidimensional space specified by the classifications or the values of the classification axes allocated to the respective classification axes.

21. The visualizing program according to claim 20, wherein
the conditions for selecting the components are represented by relationships to values indicated by the classification axes, and
the computer is caused, in the classification axis display processing, to extract the classification axes with greater frequency of use as the conditions for the number of dimensions, among the classification axes included in the conditions, and allocate the classification axes each to the different dimensional axes.

22. A visualizing program to be applied to a computer that visualizes a plurality of components calculated based on learning data being a set of a plurality of samples,
the visualizing program causing the computer to execute:
classification axis display processing that extracts classification axes to be used for conditions from a classification model classified by the conditions under which the samples are applied to the components, and displays the classification axes in association with any of dimensional axes of a multidimensional space that displays the components;
classification content display processing that allocates classifications or values of the classification axes to dimensional axes split in accordance with types of the associated classification axes and displays the classifications or the values of the classification axes; and
classification target display processing that displays the components that meet the conditions under which the samples are applied, in regions on the multidimensional space specified by the classifications or the values of the classification axes allocated to the respective classification axes.

23. The visualizing program according to claim 22, causing the computer,
in the classification target display processing, to display information on the number of samples that meet the conditions of the classification axes together with the components that meet the conditions under which the samples are applied, in the regions on the multidimensional space specified by the classifications or the values of the classification axes allocated to the respective classification axes.
